# EUROPEAN PATENT APPLICATION

(11) **EP 4 593 228 A1**
(43) Date of publication of application: **30.07.2025**
(21) Application number: 24154126.7
(22) Date of filing: 26.01.2024
(51) Int. Cl.: H02J 3/32, H02J 7/00

(54) **METHOD FOR OPERATING A BATTERY ENERGY STORAGE SYSTEM AND BATTERY ENERGY STORAGE**

(71) Applicant: Siemens Energy Global GmbH & Co. KG, 81739 München (DE)
(72) Inventor: Adu, James Amankwah, 90459 Nürnberg (DE); Khodamoradi, Aram, 90402 Nürnberg (DE); Hammad, Mohammad Mamoun Mustafa, 10963 Berlin (DE)

(57) **Abstract**

The invention relates to a battery energy storage system comprising at least two batteries, which are connectable to a grid by means of a converter and transformer, and a first controller unit (1a) and a second controller unit (1b) for controlling to either charge the batteries with electric energy from the grid or discharge electric energy from the batteries into the grid, characterized in that the second controller unit (1b) are provided for monitoring the actual state-of-charge and the capacity of the batteries.

## Description

The present invention relates generally to a method of operating a battery storage system, said battery energy storage comprising at least two batteries storage units capable of being charged to a maximum state of charge which batteries are connected to a grid for controllably discharging energy into the grid or being charged from the grid.

Further, the invention relates to a Battery energy storage system.

Battery Energy Storage Systems (BESS) are becoming more and more important in electrical power systems. This is becoming increasingly important as the integration of fluctuating renewable energy sources such as solar and wind power increases. When it comes to electricity generation, it must be taken into account that these renewable sources fluctuate in time. Having the ability to supply or absorb large amounts of power in milliseconds, batteries are in fact very suitable for ramp rate control or limitation, as well as for frequency regulation, load balancing or peak shaving. However, since energy capacity is still an important cost factor, it is crucial to correctly dimension the battery size to the application and to operate it in the least stressful way possible.

Grid-scale Battery Energy Storage Systems (BESSs) usually consist of multiple Battery Energy Storage Systems units operating in parallel. During normal operation of the BESS, possible difference in charge and / or discharge of different BESS units could lead to unbalance between them; i.e., they would have different state-of-charges (SoCs). State of charge unbalance could also arise when a BESS or a set of BESSs are disconnected, for example, due to failure or normal maintenance, and then reconnected.

State of charge unbalance between different BESS units will reduce the utilization time of some units, and thus less reliability of the system. It is, therefore, important to have a plant-level state of charge balancing in the BESS control.

A BESS power and/or frequency control together with plant-level state of charge balancing has been addressed in the literature by establishing communication among BESS units, or through hardware adaptations in the power-electronics converter used in the BESS unit, and adaptive power and/or frequency droop control.

The communication between several BESS units leads to issues with response time and reliability, hardware adaptation for BESS plants with several power converters can have its own complication and costs in practice, and adaptive droop control would be difficult to implement in a BESS plant with different types of power converters.

This is where the invention comes in, the task of which is to improve the availability of a battery energy storage systems.

The Problem is solved by a method of operating a battery energy storage system, said battery energy storage comprising at least two battery energy storage units capable of being charged to a maximum state of charge which batteries are connected to a grid for controllably discharging energy into the grid or being charged from the grid, wherein said method comprises the following steps:
- Acquisition of a first value (active power set point (P_{REF_PCC})) and transmission to the first controller unit (1a)
- Capture a second value (measured active power from the BESS (P_{Meas_PCC})) and transmit it to the first controller unit (1a)
- Generating a controller output signal (total control active power set point (P_{REF_PCS})) in the first controller unit (1a), taking into account the first value and the second value
- Transmitting the controller output signal (total control active power set point (P_{REF_PCS})) to a second controller unit (1b)
- Measure one state of charge value (SoC_{Batt_i}) for each battery energy storage unit
- Sending the state of charge value (SoC_{Batt_i}) for each battery energy storage unit to the second controller unit (1b)
- Generate one controller output signal (active power set point to (P_{REF_PCS_i})) for a power electronic converter connected to each battery energy storage unit, taking into account the state of charge values (SoC_{Batt_i}), wherein following applies: i=1,2,...,n (n is the number of batteries).

There are different modes to calculate a total active power set point (P_{REF_PCS}) depending on the user's choice: no power control, only power control (active power set point (P_{REF_PCC}) is compared to the measured active power (P_{Meas_PCC}) and the error is processed by a regulator), and power-frequency control which injects a certain total control active power set point (P_{REF_PCS}) into the grid (or absorbs from the grid) depending if the measured active power (P_{Meas_PCC}) is less than (or greater than) a reference range.

Further the problem is solved by a battery energy storage system, comprising at least two battery energy storage units, which are connectable to a grid by means of a converter and transformer, and a first controller and a second controller for controlling to either charge the batteries with electric energy from the grid, or discharge electric energy from the batteries into the grid, wherein the second controller are provided for monitoring the actual state of charge and the capacity of the batteries. The problem is solved by requesting the batteries with higher State of charge to discharge faster, and requesting those with less state of charge to discharge lower.

Advantageous further developments are specified in the depending claims.

A secondary controller, e.g. power plant controller is proposed to handle the above described problem, by sending different power setpoints to the different BESS units. The overall power demand for the BESS plant is generated by direct power control or frequency and/or power droop, and then it is distributed among different units, according to their state of charge level.

As a battery unit undergoes charge and discharge cycles, its state of health gradually changes, leading to a decrease in its capacity. Also, different BESS units in parallel operation may for this reason have different capacities over a period of time. The invention proposes a state of charging balancing method which takes different BESS capacities into account.

The proposed plant controller incorporates a functionality capable of distributing active power setpoints to the individual BESS units to counteract, in all the possible operating modes, the possible SoC unbalance aligning the SoCs of all the units to the same value taking into consideration the possibility of the BESS units having different capacities over time.

The properties, features and advantages of this invention described above, and the way in which these can be achieved, will be explained in more detail in conjunction with the invention so as to be clearer and more markedly understandable.

One exemplary embodiment of the invention will be described below with reference to the drawing. This is intended not to illustrate the exemplary embodiment to scale, but rather the drawing, where it is conducive to clarification, is set out in a schematized and/or slightly distorted form.

With regard to additions to the teaching which is directly apparent in the drawing, reference is made to the relevant prior art.

Identical components or components with the same function are marked with the same reference signs.

Embodiments of the invention are described below on the basis of the drawings. These are not intended to represent the embodiments to scale, but rather the drawing, where useful for explanation, is executed in schematized and / or slightly distorted form.

The figures illustrate:

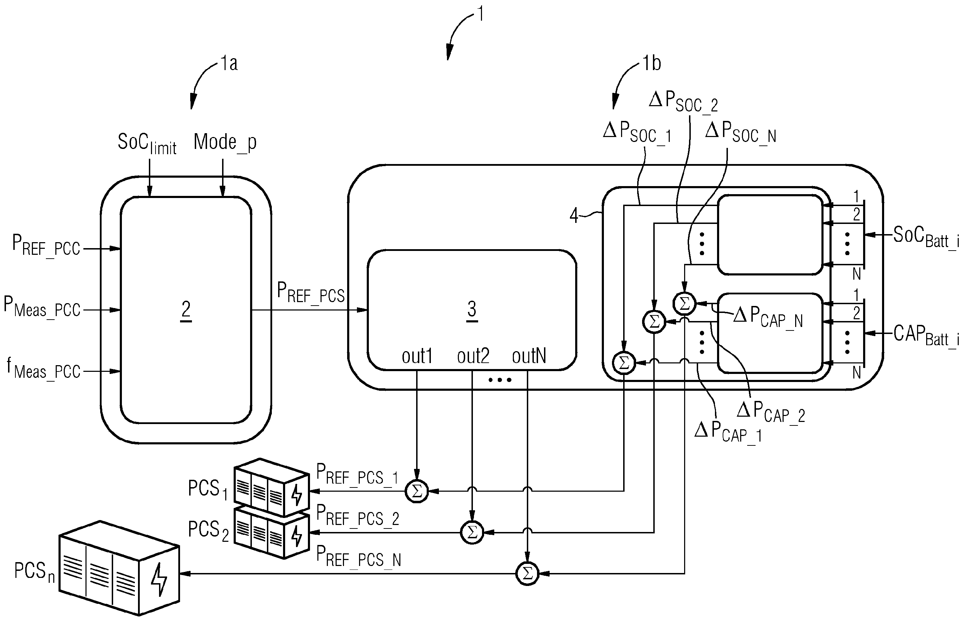

- Figure 1: illustrates a controller for a battery energy storage system according to the invention.

Figure 1 illustrates a controller 1 for a battery energy storage system according to the invention. The controller unit 1 comprises a first controller 1a and a second controller 1b, which are explained in more detail below.

The controller unit 1 is used for a method of operating a battery energy storage system. The battery energy storage system comprises at least two batteries capable of being charged to a maximum state of charge which batteries are connected to a grid for controllably discharging energy into the grid or being charged from the grid.

Each battery is characterized by a state of charge SoC_{Batt_i}(i=0 1,2,...,n). That means if there are n batteries then there are n values for the state of charge SoC_{Batt_i}.

Further each battery is characterized by a capacity CAP_{Batt_i} (i=1,2,...,n). That means if there are the same number n of batteries then there are n values for the capacitiy CAP_{Batt_i}.

A first value, called Active Power Set Point P_{REF_PCC}, is fed to the first controller unit 1a. A second value, which corresponds to a Measured Active Power P_{Meas_PCC} from the battery system, is measured and fed to the first controller unit 1a. A third value, which corresponds to a measured frequency f_{Meas_PCC}, is also fed to the first controller unit 1a.

Furthermore, a limit value SoCₗᵢₘᵢₜ for the state of charge is determined and fed to the first controller unit 1a. A mode Mode_p can also be entered or selected via an input.

The first controller unit 1a is generating a controller output signal with a P/f controller 2, which corresponds to a total control active power set point P_{REF_PCS}. In a first step the first controller unit 1a is taking into account the first value and the second value.

The total control active power set point P_{REF_PCS} is then transferred to the second controller unit 1b.

The value P_{REF_PCS} is sent to a dispatch center 3. Likewise, the SoC and BAC values are processed via an SoC/CAP unit 4 with values from the dispatch center 3, and the active power set point P_{REF_PCS_i} (i=1,2,...,n) is determined and output for each battery or PCSᵢ (i=1,2,...,n).

The controller unit 1 incorporates a functionality capable of adjusting further the processed active power setpoints in order to correct possible errors arising from BESS units with different capacities.

According to the invention a complete solution is provided that includes the power/frequency control together with plant-level SoC balancing, as well as potential difference in the BESS capacities.

Following is a more detailed explanation of the operating mode of the controller unit 1. Figure 1 shows the combined power/frequency response with plant level state of charge balancing scheme. The P/f controller 2 consists of three working modes (Mode_p).

For mode_0, there is no closed-loop control; it just acts as a limiter to align the active power setpoint P_{REF_PCC}, with the maximum/minimum active power capabilities.

For mode_1, the measured power at PCC (point of common coupling), P_{MEAS_PCC}, is compared with P_{REF_PCC} and a PI regulator is used to ensure the active power achievement.

For mode_2, a similar process as mode_1 is repeated on the power path, but the reference power is adjusted based on a droop curve proportional to the frequency.

The scheme is enhanced by adding state of charge (SoC) limits, meaning that when SoC of the battery system is outside an adjustable bandwidth, the charging/discharging is ceased.

The SoC balancing function adjusts the power reference of each power conversion system (PCS) depending on the SoC and capacity of the connected battery system as shown in figure 1. Batteries with relatively higher SoC or high-capacity levels will be subject to more discharge.

Although the invention has been further illustrated and described in detail by the preferred embodiment, the invention is not limited by the disclosed examples and other variants can be derived by the skilled person without leaving the scope of protection of the invention.

## Claims

1. Method of operating a battery energy storage system, said battery energy storage system comprising at least two battery energy storage units capable of being charged to a maximum state-of-charge which batteries are connected to a grid for controllably discharging energy into the grid or being charged from the grid,
**characterized in that** said method comprises the following steps:
- Acquisition of a first value (active power set point (P_{REF_PCC})) and transmission to the first controller unit (1a)
- Capture a second value (measured active power from the BESS (P_{Meas_PCC})) and transmit it to the first controller unit (1a)
- Generating a controller output signal (total control active power set point (P_{REF_PCS})) in the first controller unit (1a), taking into account the first value and the second value
- Transmitting the controller output signal (total control active power set point (P_{REF_PCS})) to a second controller unit (1b)
- Measure one state of charge value (SoC_{Batt_i}) for each battery energy storage unit
- Sending the state of charge value (SoC_{Batt_i}) and the capacity values (CAP_{Batt_i}) for each battery energy storage unit to the second controller unit (1b)
- Generate one controller output signal (active power set point to (P_{REF_PCS_i})) for a power electronic converter connected to each battery energy storage unit, taking into account the state of charge values (SoC_{Batt_i}) and capacity values (CAP_{Batt_i}), wherein following applies: i=1,2,...,n (n is the number of batteries) .

2. Method according to claim 1,
with the next steps:
- Measurs a value for each of the capacities (CAP_{batt_i}) for each battery energy storage unit
- Sending the value CAP_{batt_i} for each battery energy storage unit to the second controller unit (1b)
- Generate one controller output signal (active power set point to (P_{REF_PCS_i})) for each battery, taking into account the value CAP_{batt_i}, wherein following applies: i=1,2,...,n (n is the number of batteries) .

3. Method according to claim 1 or 2,
with the next steps:
- Capture a third value (measured frequency f_{Meas_PCC}) and transmit it to the first controller unit (1a)
- Generating a controller output signal (total control active power set point (P_{REF_PCS})) in the first controller unit, taking into account the third value.

4. Battery energy storage system for conducting the method according to claim 1,
comprising at least two batteries, which are connectable to a grid by means of a converter and transformer, and a first controller unit (1a) and a second controller unit (1b) for controlling to either charge the batteries with electric energy from the grid or discharge electric energy from the batteries into the grid, **characterized in that** the second controller unit (1b) are provided for monitoring the actual state-of-charge and the capacity of the batteries.
